# EUROPEAN PATENT SPECIFICATION

(11) **EP 1 362 456 B1**
(45) Date of publication and mention of the grant of the patent: **19.03.2008**
(21) Application number: 01273516.3
(22) Date of filing: 09.10.2001
(51) Int. Cl.: H04L 12/56

(54) **SYSTEM AND METHOD FOR INTERCEPTING TELECOMMUNICATIONS**
SYSTEM UND VERFAHREN ZUM ABFANGEN VON TELEKOMMUNIKATIONEN
SYSTEME ET PROCEDE D'INTERCEPTION DE TELECOMMUNICATIONS

(30) Priority: 10.10.2000 US 239048 P
(43) Date of publication of application: 19.11.2003
(73) Proprietor: Nortel Networks Limited, St Laurent, Québec H4S 2A9 (CA)
(72) Inventor: PYKE, Craik, R., Nepean, ON K2H 8A6 (CA); HERN, William, Knowl hill, Reading RG 10 9UP (GB); THOMPSON, Roger, L., RTP, NC 27709 (US); CARON, Serge, S., Gatineau, PQ J8V 1X9 (CA); MOUNJI, Halima, H., Kanata, ON K2T 1E2 (CA); EWOTI, Charles, B., 88677, Markdorf (DE); GOERENS, Michael, 88045 Friedrichshafen (DE); STRENG, Pete, J., Manotick, ON K4M 1G5 (CA); GOERTZEN, Christopher, J., Ottawa, ON K1G 6N6 (CA); KITTLITZ, Christian, Ottawa, ON K1V 8G1 (CA); TAYLOR, Richard, C., Manotick, ON K4M 1A2 (CA); WELHAM, Michael, 88662 Lippertsreute (DE)
(74) Representative: Mackenzie, Andrew Bryan
(86) International application number: PCT/US2001/031548
(87) International publication number: WO 2002/082782

(56) References cited:
- WO-A-00/42742
- WO-A-00/56029
- WO-A-99/17499
- US-A- 6 147 994
- US-B1- 6 246 688
- US-B1- 6 356 546
- "UNIVERSAL MOBILE TELECOMMUNICATIONS SYSTEM (UMTS); 3G SECURITY; LAWFUL INTERCEPTION ARCHITECTURE AND FUNCTIONS (3G TS 33.107 VERSION 3.0.0 RELEASE 1999)" ETSI TS 133 107 V3.0.0, XX, XX, January 2000 (2000-01), page 55, XP002214517

## Description

### Background of the Invention

In law enforcement, it is sometimes necessary to monitor an individual or group of individuals to support allegations of illegal activity. Indeed, many countries mandate that telecommunications service providers and equipment manufacturers provide a law enforcement agency the ability to perform lawful interception of telecommunications to and from a subject being monitored.

Historically, lawful intercept consisted of using alligator clips which a law enforcement agency would physically clip to, thereby tapping into, the telecommunication line of a subject (the monitored party) and monitor calls to or from an associate (a party calling or being called by the subject.)

There are two categories of intercept, call data and call content. Call data intercept includes monitoring call events, for example, monitoring if the subject originates a call, or if a call is terminated on the subject, or if a call is forwarded elsewhere. This type of monitoring, known as pen register, provides the phone number of both the person called and the person calling, along with call events and time-date stamps of when the events occurred. In contrast, call content includes the actual content of the call, i.e., the conversation that takes place, plus call data. Call content is transmitted to the law enforcement agency in real time so that the law enforcement agency can monitor the conversation as it happens. This transmission must be transparent to the subject and the associates so that they are not aware that they are being monitored.

As telecommunications equipment evolved, modules were provided in the telecommunication switch that provided the law enforcement agency the ability to lawfully intercept telecommunications. For example, in a Time Division Multiplexed (TDM) switch such as Nortel Networks' DMS-100, a switch network fabric provides an access point that allows a law enforcement agency to tap the subject's phone line. This type of centrally located access point is known as an Intercept Access Point (IAP). The resulting information is then provided to the law enforcement agency.

As telecommunications have evolved to packet-based communications, to include Internet Protocol (IP) and Asynchronous Transfer Mode (ATM) protocols, the changing architecture of the telecommunications switches has necessarily made the interception of content more difficult.

One way in which it has been attempted to overcome this difficulty is described in International Patent Application No. 99/17499. In this application the use of a legal interception nodded is described where at least some of the packets originating from such a mobile station or terminated thereto are routed and/or copied from at least one of the support nodes (SGSN, GGSN) via the legal interception node to the law enforcement authority. However, as the LIN appears as a transmitting or receiving node to the support nodes the system may not be completely transparent.

A method by which interception can be initiated are described further in International Patent Application Number 00/56029. This patent application describes an interception data collection function that can be implemented in an existing network node, such as a GPRS support node, allowing flexible implementation of an interception system. Finally, a method for transferring intercepted packets from an intercepting network element to a Law Enforcement Agency is described in International Patent Application 00/42742. In this application data sent to the law enforcement agency is transmitted via a secure tunnel provided by encryption processing.

In September of 1998, the Federal Communications Committee (FCC) ruled that new TDM equipment must have lawful intercept capability built in. Moreover, in August of 1999 the FCC ruled that packet communications interception capability will be required by September 30, 2001.

Accordingly, there is a need to be able to intercept voice over packet communication in a manner that satisfies governmental requirements, is transparent to the subject and the associate, in real time, and works with standard protocols such as IP and ATM applications.

### Summary of the Invention

The invention results from the realization that a truly efficient and effective system and method for intercepting voice over packet communications is achieved in which a packet communication signal directed to or from a subject is received by a centralised replicator. The header is stripped from the packet leaving only the payload, the payload is replicated, a header is added to the replicated payload and the replicated payload is transmitted to a Law Enforcement Agency. A header is added to the original payload and the packet is retransmitted to the intended recipient. Alternatively, the entire packet can be replicated and the headers stripped off both the original packet and the replicated packet and a new header added to each payload. The payloads are then transmitted to the intended recipient and the Law Enforcement Agency.

According to one aspect of the present invention there is provided a method of intercepting a telecommunication signal transmitted between a first media gateway and a second media gateway as recited in Claim 1. According to a second aspect of the present invention there is provided a system for intercepting a telecommunication signal transmitted between a first media gateway and a second media gateway as recited in Claim 9.

In one embodiment, there is provided a method of intercepting a telecommunication signal including receiving a telecommunication packet comprising a predetermined header and a payload, removing the predetermined header from the packet, replicating the payload, adding a new header to the replicated payload and directing the replicated payload to the address associated with the new header.

It can be determined whether a telecommunication packet is to be monitored. The new header can be associated with one of an intended recipient and a law enforcement agency. The predetermined header can be replaced with a second predetermined header. This replacement can occur before or after replication of the payload. The second predetermined header can be associated with the other of the intended recipient and the law enforcement agency. The payload can be directed to the address associated with the second predetermined header.

In another embodiment there is provided a system for intercepting a telecommunication signal. The system includes an audio server, responsive to a telecommunication signal, for receiving a telecommunication packet comprising a predetermined header and a payload, a termination point for removing the predetermined header from the packet, for replicating the payload and for adding a new header to replicated payload and a relay point for directing the replicated payload to the address associated with the new header.

The new header can be associated with one of an intended recipient and a law enforcement agency. There can be a media gateway for directing the telecommunication signal to the audio server and also a media gateway controller, responsive to the media gateway, for determining that the telecommunication packet is to be intercepted. The media gateway controller can include a call discriminator, responsive to the telecommunications signal, for determining that the telecommunication signal is subject to interception. There can be a second termination point for adding a second predetermined header to the payload. The second predetermined header can be associated with the other of the intended recipient and the law enforcement agency. There can be a second relay point for directing the payload to the address associated with the second predetermined header.

In yet another embodiment, there is provided a method for intercepting a telecommunication signal by receiving a telecommunication packet comprising a predetermined header and a payload, removing the predetermined header from the packet, replicating the payload, adding a new header to replicated payload and directing the replicated payload to the address associated with the new header.

It can be determined whether the telecommunication packet is to be intercepted. The new header can be associated with one of an intended recipient and a law enforcement agency. The predetermined header can be removed from the payload and replaced with a second predetermined header. This replacement can occur before or after replication of the payload. The second predetermined header can be associated with the other of the intended recipient and the law enforcement agency. The payload can be directed to the address associated with second predetermined header.

There is further provided a method of redirecting a telecommunication signal. The method includes receiving a telecommunication packet comprising a header and a payload, removing the predetermined header from the packet, adding a second predetermined header to payload and directing the replicated payload to the address associated with the second predetermined header.

It can be determined whether a telecommunication packet is to be redirected. The second predetermined header can be associated with one of an intended recipient and a law enforcement agency. The payload can be replicated. This replication can occur before or after the predetermined header is removed. A new header can be added to the replicated payload and the replicated payload can be directed to the address associated with second predetermined header. The new header can be associated with the other of the intended recipient and the law enforcement agency.

There is still further provided a method of monitoring a telecommunication signal to or from a subject being monitored from or to an associate. The method includes determining that a telecommunication signal is subject to being monitored, establishing a connection between a first gateway associated with one of a subject being monitored and an associate and a first termination point representing a second gateway associated with the other of the associate and the subject, establishing a connection between the second gateway and a second termination point representing the first gateway and establishing a connection between the first termination point and the second termination point to establish a bearer channel between the subject and the associate wherein the first and second gateways appear to be connection directly. ,

A connection can be established from at least one of the first termination point and the second termination point to a gateway associated with other than the subject and the associate concurrently with the connection between the first termination point and the second termination point.

There is provided even still further a method of redirecting a telecommunications signal intended for one of a subject and an associate by associating a first termination point with a first intended termination point of a first media gateway, associating a second termination point with a second intended termination point of a second media gateway, establishing a connection between the first intended termination point and the second termination point, establishing a connection between the second intended termination point and the first termination point and establishing a connection between the first termination point and the second termination point wherein the first intended termination point and the second termination point appear to be connected directly.

### Brief Description of the Drawings

Figure 1 is a schematic block diagram generally representing a system for intercepting packet communications including a centralized replicator according to the present invention;
Figure 2 is a more detailed schematic block diagram, similar to Figure 1, including a media gateway controller associated with each media gateway for implementing the necessary connections to affect interception of packet communications;
Figure 3 is a schematic block diagram, similar to Figure 1, demonstrating the actual and ephemeral connections when implementing the call intercept according to one aspect of the present invention;
Figure 4 is a schematic block diagram demonstrating associated connections internal to the centralized replicator for affecting bearer channel tandeming for intercepting packet communications;
Figure 5 is a schematic block diagram representing bearer channel tandeming by the call discriminator in response to a requirement to intercept packet communications;
Figure 6 is a flow chart representing one method of intercepting packet communications according to the present invention;
Figure 7 is a schematic block diagram, similar to Figure 2, in which a second associate establishes a call to a subject being monitored and a call waiting feature is invoked;
Figure 8 is a schematic block diagram, similar to figure 4, demonstrating the connection topology within the centralized replicator when the call-waiting feature is invoked; and
Figure 9 is a schematic block diagram, similar to Figure 8, demonstrating the connection topology within the centralized replicator when a conference call feature is invoked.

### Detailed Description

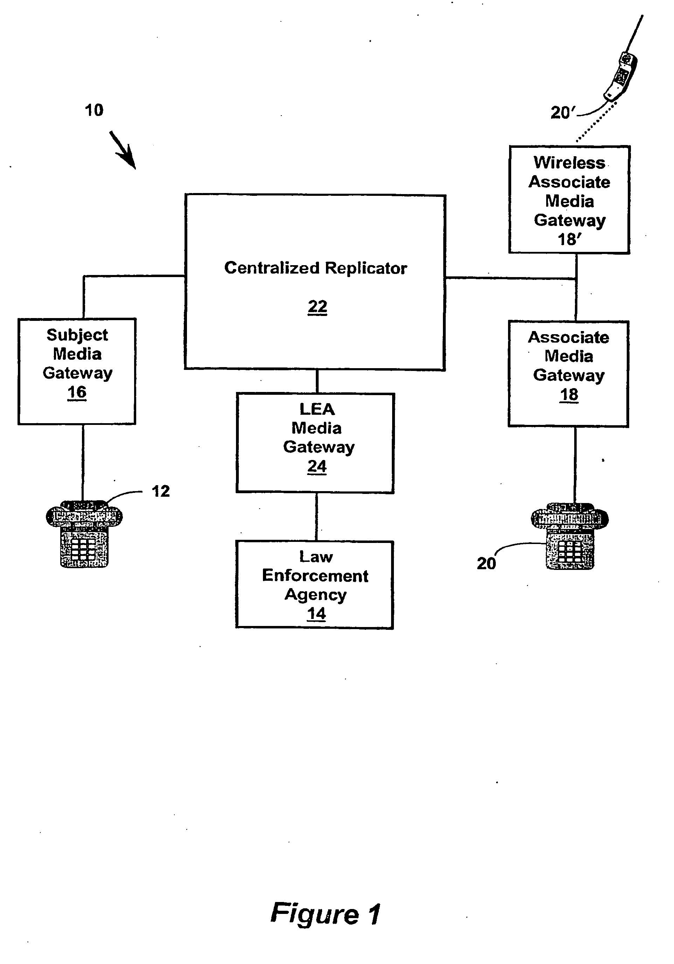

According to the present invention there is generally provided a system **10,** Figure 1, which can intercept a packet telecommunication signal to or from a subject **12** being monitored, for example, by a Law Enforcement Agency (LEA) **14.** There is a first, or subject, media gateway **16** associated with subject **12** being monitored and a second, or associate, media gateway **18** associated with an associate **20** who is calling or being called by subject **12.** There can also be a wireless associate media gateway **18'** where an associate **20'** is communicating with subject **12** over a wireless phone.

A call is initiated between subject **12** and associate **20.** It is determined that the telecommunication signal is one targeted for monitoring and is to be intercepted. Accordingly, for a call from associate **20** to subject **18,** the telecommunication signal, rather than being sent directly to the intended associate media gateway **18,** is redirected from subject media gateway **16** to a centralized replicator **22** which may, for example, comprise a universal audio server associated with LEA **14.** When centralized replicator **22** receives the telecommunication signal, comprised of individual packets with each packet including a header and a payload, centralized replicator **22** removes the header from the packet leaving the payload intact. Centralized replicator **22** replicates the payload, adds a header to the replicated payload and transmits the replicated payload to a law enforcement agency gateway **24.** Once the payload has been replicated a header is added to the original payload and that packet is retransmitted by centralized replicator **22** to associate media gateway **18/18'** for delivery to associate **20/20'.**

Alternatively, the entire incoming packet can be replicated, including header and payload. Once the packet has been replicated, the headers of the original and replicated packets are removed. A new header is added to the replicated payload for delivery to law enforcement agency **14** and a new header is added to the original payload for delivery to the respective intended recipient, subject **12** or associate **20.**

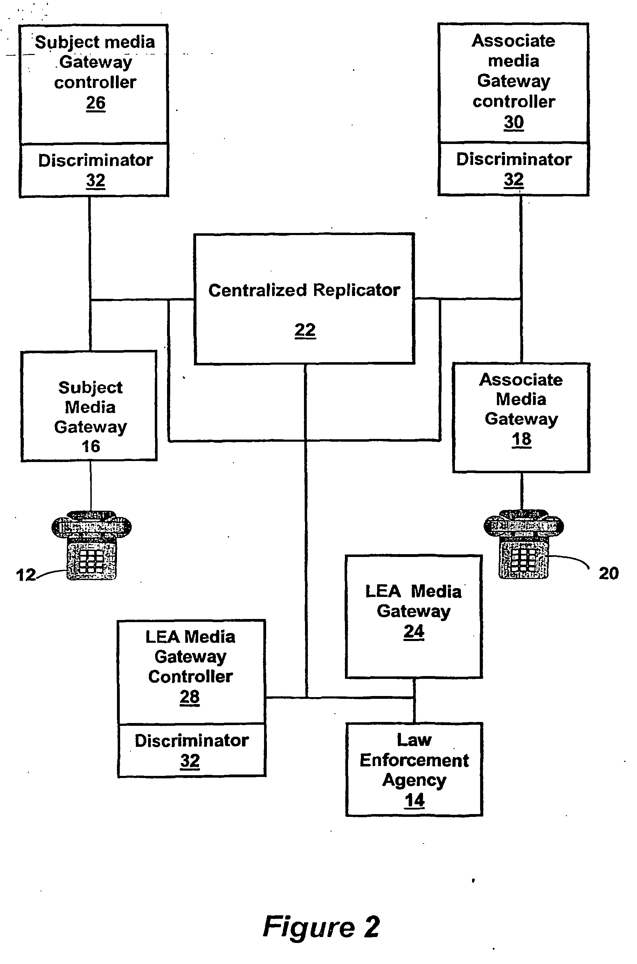

Referring now to Figure 2, associated with each media gateway **16, 24** and **18,** can be a media gateway controller **26, 28** and **30,** respectively. As used herein, a media gateway controller refers to one or more devices whose functionality can include performing media gateway control signaling and call processing functions. Each associated gateway controller can include a call discriminator **32** comprising call processing software that determines that a call from or between associated gateways, for example subject media gateway **16** to associate media gateway **18,** is in fact subject to monitoring. There can be included within discriminator **32,** for example, a lawful intercept database that identifies subscribers, e.g., subject **12,** who are subject to a surveillance order.

Once it has been determined that the call is subject to monitoring, subject media gateway controller **26** sends a first message, for example using Media Gateway Control Protocol (MGCP) or H.248 protocol, to LEA media gateway **28** to effect a connection between subject media gateway **16** and centralized replicator **22** and another message to effect a connection between associate media gateway **18** and centralized replicator **22.** The redirection of the call through centralized replicator **22** is transparent to call processing and service functions and the call appears to be set up normally as if subject media gateway **16** and associate media gateway **18** were connected directly. The above example assumes that subject **12** and associate **20** do not share a common gateway. However, a shared gateway would not change the operation of the subject invention as call discrimination and packet replication would take place in the same manner, transparent to the caller.

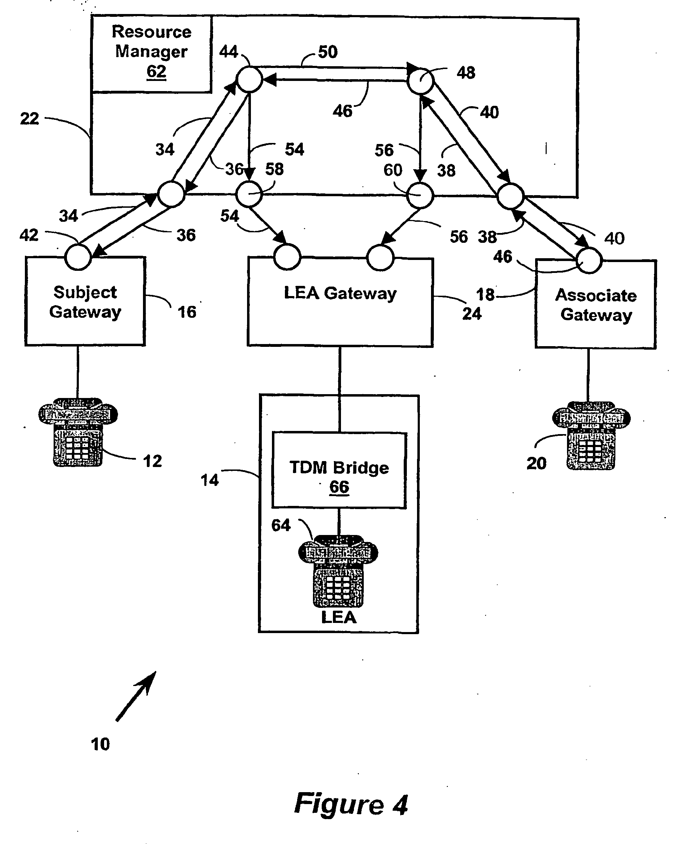

LEA Media gateway controller **28** effects redirection of the call from the intended recipient and instructs centralized replicator **22** to make internal connections, referred to as bearer channel tandeming, in order to facilitate packet replication as will be discussed further in reference to Figure 4. Once media gateway controller **28** has established the necessary connections between subject media gateway **16,** centralized replicator **22** and associate media gateway **18,** media gateway controller **28** initiates the connections between centralized replicator **22** and law enforcement agency media gateway **24** which is then connected to LEA **14.**

Accordingly, a call subject to monitoring will contain packets whose headers have been altered or substituted such that instead of the packets being transmitted to and from gateways **16** and **18** directly (the intended recipients), the packets are redirected to centralized replicator **22** for replication. Media gateway controller **28** alters the address information of the messages such that it appears to subject media gateway **16** that the message is coming from associate media gateway **18** and messages sent to associate media gateway **18** appear to come from subject media gateway **16.**

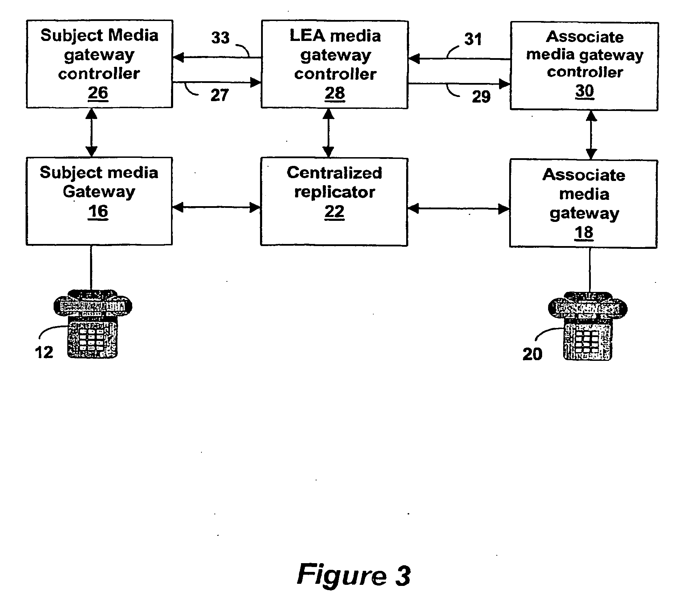

As shown in Figure 3, subject media gateway controller **26** sends a message **27** with the session description information, for example using a protocol such as the Session Description Protocol (SDP), of subject media gateway **16** to LEA media gateway controller **28.** Media gateway controller **28** sends a message **29** including the session information of media gateway **16** to associate media gateway controller **30,** but with the address of centralized replicator **22.**

Similarly, associate media gateway controller **30** sends a message **31** acknowledging the session description of media gateway **16** with the session description of associate media gateway **18.** LEA media gateway controller **28** sends a message **33** acknowledging the session description of subject media gateway **16** with the session description of associate media gateway **18,** but with the address of centralized replicator **22.**

Accordingly, a communication path from subject media gateway **16** to associate media gateway **18** is tandemed through centralized replicator **22,** but is transparent to subject **12** or associate **20.**

Figure 4 further demonstrates how bearer channel tandeming can be accomplished through centralized replicator **22** by modifying the association between packet streams and endpoints to affect the connections and representations demonstrated in Figure 3.

Packet streams **34, 36, 38** and **40** originate from associated endpoints **42, 44, 46** and **48,** respectively. Accordingly, the respective transmit and receive streams **34/36** of endpoint **42,** while appearing to be associated with endpoint **46** (associate media gateway **18),** are associated with end point **44** within centralized replicator **22.** Similarly, respective transmit and receive streams **38/40** of endpoint **46** are associated with end point **48** while appearing to be associated with end point **42** (subject media gateway **16).** Finally, internal streams **50** and **52** are associated with end points **44** and **48.** Connections to end points **42, 44, 46** and **48** are initiated from media gateway controller **28** (Figure 3) where endpoints **42** and **46** are the recognized originator and terminator endpoints.

Endpoints **42** and **46** are typically configured to convert the TDM information from subject **12** or associate **20** into, for example, IP or ATM packets or cells depending upon the fabric of centralized replicator **22.** Similarly, information received at these endpoints from centralized replicator **22** is converted from IP/ATM to TDM. In contrast, endpoints **44** and **48** within centralized replicator **22** are typically configured only as packet relay points and do not provide any transcoding or jitter correction in order to minimize latency and reduce the risk of detection by subject **12** or associate **20** of the monitoring. Flow control buffers (not shown) can be provided to avoid loosing packets.

Packet relay endpoints **44** and **48,** respectively, strip the header off incoming packet streams **34** and **38** that they receive from respective endpoints **42** and **46,** replicate the payload, add a new header to the replicated payload and transmit replicated packet streams **54** and **56** to law enforcement agency gateway **24** via endpoints **58** and **60.** Packet relay endpoints **44** and **48** also transmit the original payload via streams **50** and **52,** respectively, to each other, adding new headers directing the packets to respective gateways **16** and **18.** Alternatively, the entire packet may be replicated, then the replicated headers are stripped off and new headers added to redirect the replicated packets to their respective gateways.

In order to ensure transparency to subject **12** and associate **20** of the intercept, streams **54** and **56** destined for law enforcement agency **14** should be unidirectional. Accordingly, endpoints **58** and **60** should be configured as send only in the direction of law enforcement agency gateway **24.** Endpoints **58, 60** should be from the same resource pool as endpoints **44** and **48** so that the resource pools reflect what endpoints within centralized replicator **22** have internal connections between them so that media gateway controller **28** can send the appropriate connectivity messages to centralized replicator **22.** Accordingly, a resource manager **62** is provided. Moreover, endpoints **58** and **60,** as with packet relay endpoints **44** and **48,** should achieve a transmission time between endpoints that maintains low latency such that the total trip delay of the packets, including time to traverse centralized replicator **22,** does not exceed the engineered threshold of the echo cancellers of the respective media gateways.

Resource manager **62** performs several basic functions to include allocation of resources, returning resources to a free pool and reporting on resources. Resource manager **62** can provide an interface to operating personnel to indicate what resources in centralized replicator **22** are to be used for bearer channel tandeming. The connection to law enforcement agency **14** can occur in several forms to include dedicated lines, switched local links, dedicated trunks or switched remote links without departing from the scope of the invention.

A monitoring point **64** within law enforcement agency **14,** which may include an audio device, can receive the call content via a TDM multiplexed mixing bridge **66.** Monitoring point **64** receives the call content in real time, thus at the same time subject **12** hears the ring from associate **20,** law enforcement agency **14** also hears the ring back. As will be apparent to those skilled in the art, law enforcement agency gateway **24** should be able to support all possible CODEC's that can be negotiated between a subject **12** and an associate **20.**

While system **10** has been described as only performing a single replication for a single law enforcement agency, it should be understood that this is not a limitation of the present invention, as the incoming packet streams can be replicated at endpoints **44** and **48** multiple times, depending on the number of law enforcement agencies monitoring subject **12,** by configuring the hardware comprising endpoints **44** and **48** for multiple replications.

Despite the changes in the connection messages as described above, neither subject **12** nor associate **20** are provided an indication that the call is being redirected through centralized replicator **22.**

When it is determined that a call is to be monitored, the standard connectivity message from the call server can either be altered to perform the appropriate connection or the message can be split into multiple messages to perform the requested connection.

By way of example, the connection operation from the call server requesting a connection between subject **12** and associate **20** is modified into three separate connectivity operations. This is done by requesting separate connections from endpoints **42** and **44,** from endpoints **46** and **48** and from endpoints **44** to **48.**

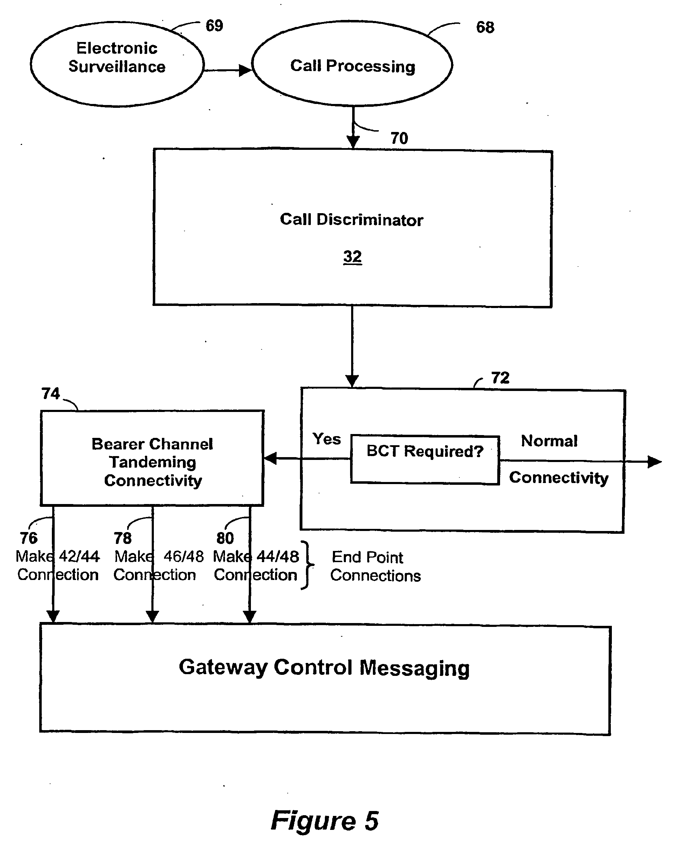

As shown in Figure 5, a call agent or call processing **68,** in response to electronic surveillance software **69,** issues a connectivity message **70** to call discriminator **32** to make a subject to associate connection from a discriminator layer in connectivity software **72** to bearer channel tandeming connectivity software **74** which issues three separate media gateway control messages. A first message **76** can initiate a connection from subject media gateway **16** (Figure 4) to centralized replicator **22.** A second message **78** can initiate a connection from associate media gateway **18** to centralized replicator **22.** A third message **80** can instruct centralized replicator **22** to make an internal association between the centralized replicator **22** to subject media gateway **16** connection and the centralized replicator **22** to associate media gateway **18** connection.

Once the associated connection between subject **12** and associate **20** has been configured, media gateway controller **28** (Figure 3) initiates the respective connections to law enforcement media gateway **24** by requesting two connections from endpoints **44** to **58** and **48** to **60** (Figure 4) within centralized replicator **22** to law enforcement media gateway **24,** where endpoints **58** and **60** connect to law enforcement media gateway **24,** as illustrated in Figure 4 above.

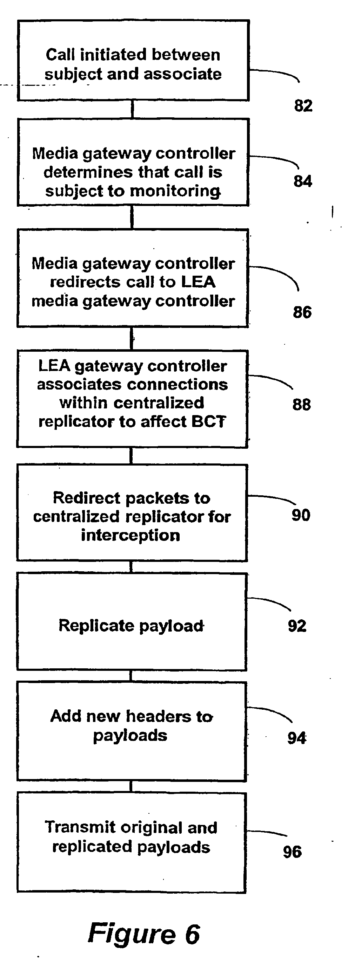

A flowchart of the present invention is presented in Figure 6. A call is initiated between a subject and an associate, Block **82.** The media gateway controller associated with the subject being monitored determines that the call is to be monitored, Block **84,** and redirects the call to the media gateway controller of the LEA by associating the LEA media gateway with the destination (associate) media gateway, Block **86.** The media gateway controller associated with the law enforcement agency effects bearer channel tandeming by associating the endpoints of the subject and associate media gateways with endpoints within the centralized replicator, Block **88.**

Once tandeming of the bearer channel has been affected, packets to and from the subject are redirected to the centralized replicator, Block **90,** where the payload is replicated, Block **92,** and new headers added to both the replicated payload and the original payload, Block **94.** The respective payloads are then transmitted to the recipient subject or associate and the LEA, Block **96.**

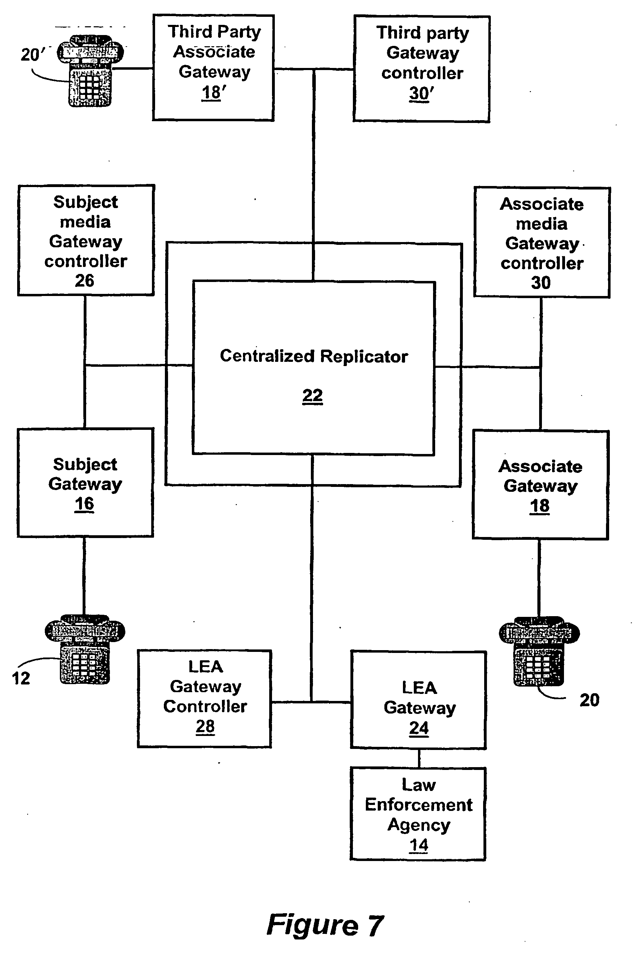

Figure 7 represents generally the situation where a call-waiting feature is invoked. For illustrative purposes, each agent is serviced by a different media gateway controller. A call is originated between subject **12** and first associate **20,** as discussed above, until subject **12** and first associate **20** enter the talking state as discussed above with the law enforcement agency **14** receiving the call content.

A second associate **20"** originates a call to subject **12.** Associate media gateway controller **30'** performs call processing routing the call to subject media gateway **16** and it is determined that the call is subject to interception. Centralized replicator **22** recognizes that subject **12** is engaged in an existing call. LEA media gateway controller **28** instructs media gateway **16** to play a call waiting tone to subject **12.**

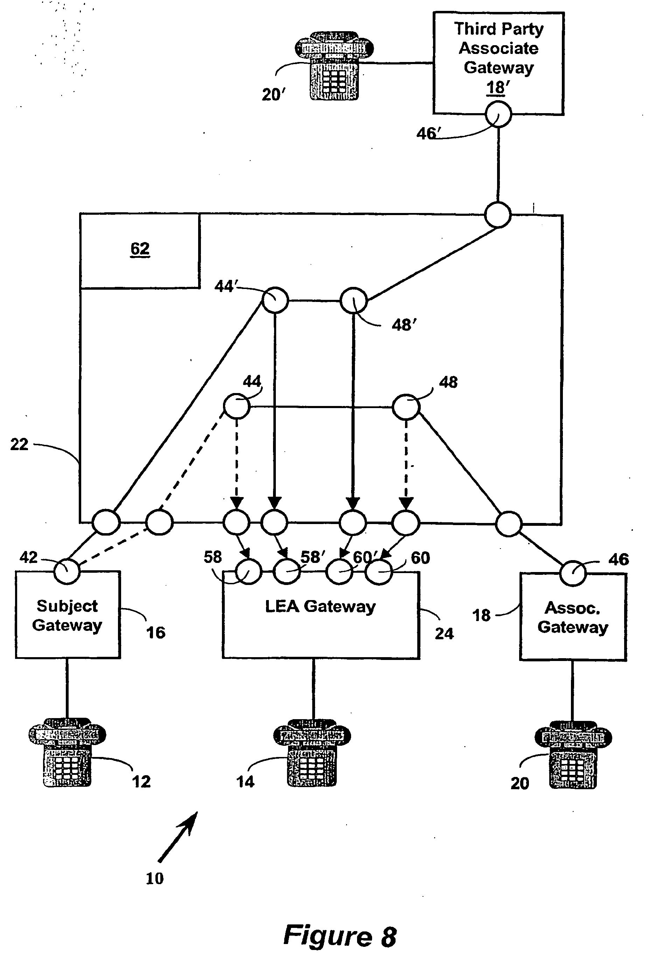

Referring now to Figure 8, subject **12** invokes a feature flash to receive the call originated by second associate **20".** Subject media gateway controller **26** (Figure 7) instructs centralized replicator **22** to break the connection between subject **12** and first associate **20.** However, Tandeming Connectivity software **74** (Figure 5) intercepts this message, and alters it to only break the connection between endpoints **42** and **44** (shown in phantom). Electronic Surveillance software **69** (Figure 5) further requests the connections with LEA **14** be broken and thus the connections between endpoint **44** and **58** and **48** and **60** are broken (shown in phantom), but the connection between endpoints **44** and **48** and **48** and **46** remain in tact.

Tandeming Connectivity software **74** obtains two more endpoints **44'** and **48** from resource manager **62** to tandem the call between subject **12,** second associate **20"** and LEA **14.** Tandeming Connectivity software **74** initiates a connection between end points **42** and **44'.** Tandeming Connectivity software **74** further Initiates a connection between endpoints **44'** and **48'** within centralized replicator **22.** The session description information of endpoints **42** and **44'** are exchanged, and the session description information of **44'** and **48'** are exchanged to facilitate the completion of the bearer channel.

Subject media gateway controller **26** acknowledges endpoint **46'** and responds with the session information of endpoint **48',** in order to facilitate the completion of the bearer channel configuration.

At this point a bearer channel is configured between end points **42** and **44', 44'** and **48'** and **48'** and **46'.** Subject **12** and second associate **20"** now enter the talking state with law enforcement agency **14** receiving the call content. Second associate **20''** terminates the call and subject **12** invokes a feature flash to return to first associate **20.** Subject media gateway controller **26** sends a message to break the connection between subject **12** and the message is intercepted and altered to only break the connection between end points **42** and **44'.** The connection with Law enforcement agency **14** is also broken, but the connections between endpoints **44'** and **48'** and **48'** and **46'** remain intact. Second associate media gateway controller **30'** (not shown) passes a clear forward message to subject media gateway controller **26** instructing connectivity to break the connection with second associate **20'.** Tandeming Connectivity software **74** (Figure 5) intercepts the message and, determining that the other external agent has been removed from,the bearer channel tandem, instructs a break of the connections between end points **44'** and **48',** and **48'** and **46'.**

Endpoints **44'** and **46'** are returned to resource manager **62** to be reentered into the free pool. Subject media gateway controller **26** (Figure 7) sends a message to reestablish a connection between subject **12** and first associate **20.** Tandeming Connectivity software **74** (Figure 5) Intercepts this message, determines the given communication is already associated with a tandemed connection, and retrieving the endpoints in use, issues connectivity messages to reestablish the connection between endpoints **42** and **44.**

The session information of end points **42** and **44** are exchanged as previously discussed completing the bearer channel tandem. Electronic Surveillance software **69** (Figure 5) requests notification of the endpoints being used to tandem the bearer channel through centralized replicator **22.** Endpoints **58** and **60** are then-connected to LEA media gateway **24** in order to provide capture of the call content. Subject **12** and associate **20** are again in a talking state through a bearer channel established via endpoints **42** and **44, 44** and **48** and **48** and **46.**

Referring to Figure 7 once again, a conference call feature is established in a manner similar to call waiting. A call is originated between subject **12** and first associate **20.** Subject media gateway controller **26** determines that the call is subject to monitoring and bearer channel tandeming is initiated connecting subject media gateway **16** and associate media gateway **18** via centralized replicator **22** as discussed above by LEA media gateway controller **26** associating respective end points within centralized replicator **22** with subject media gateway **16** and associate media gateway **18.** A connection is then initiated between end points within centralized replicator **22.**

Associate media gateway **18** acknowledges the associated endpoint within centralized replicator **22,** as if it were acknowledging subject media gateway **16,** as discussed above with reference to Figure 3, and responds with the session description information of associate media gateway **18** and a bearer channel is configured between endpoints **42, 44, 46** and **48** (Figure 4).

A connection between law enforcement agency gateway **24** and end points within centralized replicator **22** as discussed in Figure 4 above, is established. Subject **12** and associate **20** now enter a talking state and law enforcement agency **14** receives the replicated packet streams and monitors the call.

Referring again to Figure 8, subject **12** can invoke a flash feature and originate or receive a call with a second associate **20''.** Subject media gateway controller **26** (Figure 7) receives a message from the call agent of subject **12** to break the connection with first associate **20,** which is intercepted due to the bearer channel tandeming, and media gateway controller **28** sends a modified message to centralized replicator **22** (rather than to associate media gateway **18)** to break the connectivity of endpoints **42** and **44** (shown in phantom). Electronic Surveillance software **69** (Figure 5) further requests the connections with LEA 14 be broken and thus the connections between endpoint **44** and **58** and **48** and **60** are broken (shown in phantom), but the connection between endpoints **44** and **48** and **48** and **46** temporarily remain in tact.

With respect to the new caller, the media gateway determines that the call is subject to monitoring, and two more endpoints **44'** and **48'** within centralized replicator **22** are allocated by resource manager **62** and configured to tandem the call to second associate **20'.** A connection is then initiated between endpoints **42** and **44'** and media gateway controller **28** passes the endpoint of **48'** to the media gateway controller **30'** associated with second associate **20".** A connection is then initiated between **44'** and **48'** within centralized replicator **22.** The session description information of **42** and **44'** are exchanged and the session description information of **44'** and **48'** are exchanged to facilitate the completion of the bearer channel tandeming.

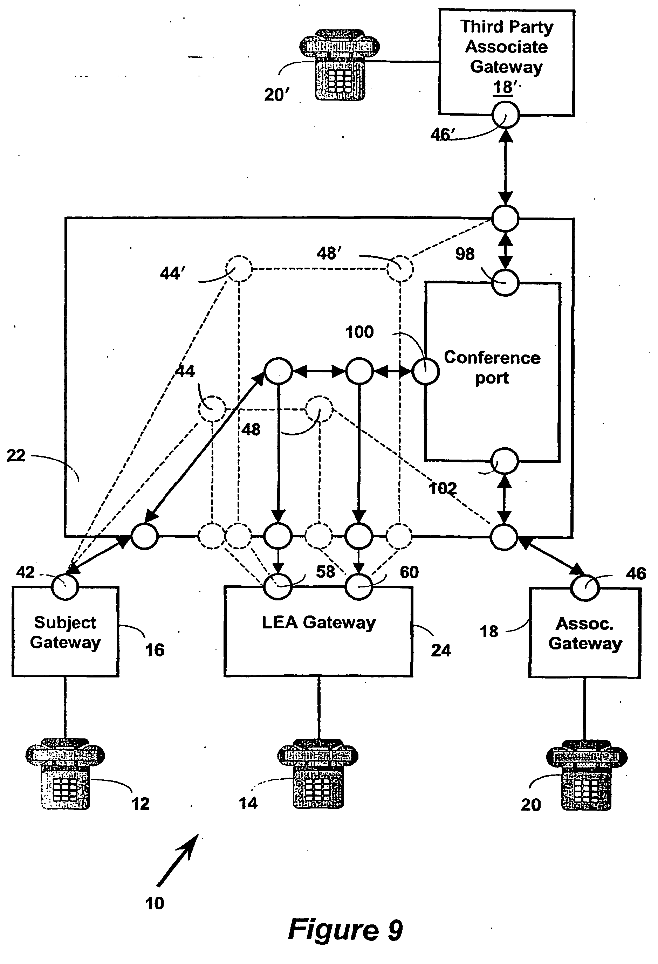

At this point a bearer channel is configured between **42** and **44', 44'** and **48',** and **48'** and **46'.** A connection is then initiated from centralized replicator **22** to LEA 14 via endpoints **44'** and **58'** and **48'** and **60'.** Subject **12** can now talk with second associate **20"** and LEA **14** can intercept the content. Subject **12** then invokes a feature flash to join first associate **20** in a three-way call. Connectivity software (Figure 5) requests that all connections associated with the previous legs be broken (shown in phantom) to enable the three-way call. Accordingly, the connection of end points **44** and **48, 48** and **46** and **44'** and **48'** and **48'** and **46'** are broken along with the corresponding LEA connection and all resources are returned to the resource pool. Media gateway controller **28** requests a connection between subject **12,** first associate **20** and second associate **20''** through conferenced ports **98, 100** and **102,** as shown in Figure 9.

## Claims

1. A method of intercepting a telecommunication signal transmitted between a first media gateway (16, 18) and a second media gateway (16, 18) in a network, the method comprising:
(a) receiving a telecommunication packet from the first media gateway (16, 18) comprising a predetermined header and a payload;
(b) removing the predetermined header from the packet;
(c) replicating the payload;
(d) adding a new header to the replicated payload; and
(e) directing the replicated payload to the address associated with the new destination header and **characterised by**
*(f)* adding an altered predetermined header or substitute header to the said telecommunication packet or the replicated payload, and directing that packet or payload to the second media gateway, the altered predetermined header or substitute header having address information such that it appears to the second media gateway (16, 18) that the message is coming from the first media gateway (16, 18).

2. The method of Claim 1 further comprising the step of determining that a telecommunication packet is to be monitored.

3. The method of claim 1 further comprising the step of determining that a telecommunication packet is to be intercepted.

4. The method of Claim 1 further comprising redirecting the telecommunication signal.

5. The method of claim 4 further comprising the step of determining that a telecommunication packet is to be redirected.

6. The method of claim 1 further comprising the step of associating the new destination header with an intended recipient or a law enforcement agency (14).

7. The method of claim 1 further comprising the step of replacing the predetermined header with a second new destination .

8. The method of claim 7 further comprising the step of associating the second new destination header with the other of the intended recipient or the law enforcement agency (14).

9. The method of claim 7 in which the step of replacing occurs after the step of replicating.

10. A system for intercepting a telecommunication signal transmitted between a first media gateway (16, 18) and a second media gateway (16, 18) within a network, the system comprising a replicator (22)including:
(a) an audio server, responsive to a telecommunication signal, for receiving a telecommunication packet from the first media gateway (16, 18), the telecommunication packet comprising a predetermined header and a payload; the replicator (22) **characterised by** further including:
(b) a termination point for removing the predetermined header from the packet, for replicating the payload and for adding a new header to the replicated payload, (16, 18); and
(c) a relay point for directing the replicated payload to the address associated with the new destination header and **characterised by**
(d) the termination point being arranged to add an altered predetermined header or substitute header to the said telecommunication packet or the replicated payload, and the relay point being arranged to direct that packet or payload to the second media gateway, the altered predetermined header or substitute header having address information such that it appears to the second media gateway (16, 18) that the message is coming from the first media gateway (16, 18)

11. The system of claim 9 wherein the first media gateway (16, 18) is adapted to direct the telecommunication signal to the audio server.

12. The system of Claim 9 further comprising a second termination point for adding a second predetermined header to the payload.

13. The system of Claim 11 in which a second new destination header is added to the replicated payload, the second new destination header being associated with a law enforcement agency (14).

14. The system of Claims 11 or 13 further comprising a second relay point for directing the payload to the address associated with the second predetermined header.

15. The system of Claim 9 further comprising a media gateway controller (26, 30), responsive to a first or second media gateway (16, 18), for determining that a telecommunication packet is to be intercepted.

16. The system of Claim 13 in which the media gateway controller (26, 30) includes a call discriminator (32), responsive to the telecommunications signal, for determining that the telecommunication signal is subject to interception.

## Patentansprüche

1. Verfahren zum Abfangen eines Telekommunikationssignals, das zwischen einer ersten Medien-Überleiteinrichtung (16, 18) und einer zweiten Medien-Überleiteinrichtung (16, 18) in einem Netzwerk übertragen wird, wobei das Verfahren Folgendes umfasst:
(a) Empfangen eines Telekommunikations-Paketes von der ersten Medien-Überleiteinrichtung (16, 18), das ein vorgegebenes Kopffeld und eine Nutzinformation enthält;
(b) Entfernen des vorgegebenen Kopffeldes von dem Paket;
(c) Replizieren der Nutzinformation;
(d) Hinzufügen eines neuen Kopffeldes zu der replizierten Nutzinformation; und
(e) Lenken der replizierten Nutzinformation an die Adresse, die dem neuen Ziel-Kopffeld zugeordnet ist, und **gekennzeichnet durch**:
(f) Hinzufügen eines geänderten vorgegebenen Kopffeldes oder Ersatz-Kopffeldes zu dem Telekommunikations-Paket oder der replizierten Nutzinformation, und Lenken des Paketes oder der Nutzinformation an die zweite Medien-Überleiteinrichtung, wobei das geänderte vorgegebene Kopffeld oder Ersatz-Kopffeld eine Adresseninformation derart hat, dass es der zweiten Medien-Überleiteinrichtung (16, 18) erscheint, dass die Mitteilung von der ersten Medien-Überleiteinrichtung (16, 18) kommt.

2. Verfahren nach Anspruch 1, das weiterhin den Schritt der Feststellung, dass ein Telekommunikations-Paket zu überwachen ist, umfasst.

3. Verfahren nach Anspruch 1, das weiterhin den Schritt der Feststellung, dass ein Telekommunikations-Paket abzufangen ist, umfasst.

4. Verfahren nach Anspruch 1, das weiterhin die Umlenkung des Telekommunikationssignals umfasst.

5. Verfahren nach Anspruch 4, das weiterhin den Schritt der Feststellung, dass ein Telekommunikations-Paket umzulenken ist, umfasst.

6. Verfahren nach Anspruch 1, das weiterhin den Schritt der Zuordnung des neuen Ziel-Kopffeldes zu einem beabsichtigen Empfänger oder einer Vollstreckungsbehörde (14) umfasst.

7. Verfahren nach Anspruch 1, das weiterhin den Schritt des Ersetzens des vorgegebenen Kopffeldes durch ein zweites neues Ziel umfasst.

8. Verfahren nach Anspruch 7, das weiterhin den Schritt der Zuordnung des zweiten neuen Ziel-Kopffeldes zu dem anderen von dem vorgesehenen Empfänger oder der Vollstreckungsbehörde (14) umfasst.

9. Verfahren nach Anspruch 7, bei dem der Schritt des Ersetzens nach dem Schritt des Replizierens erfolgt.

10. System zum Abfangen eines Telekommunikationssignals, das zwischen einer ersten Medien-Überleiteinrichtung (16, 18) und einer zweiten Medien-Überleiteinrichtung (16, 18) in einem Netzwerk übertragen wird, wobei das System einen Replikator (22) umfasst, der Folgendes einschließt:
(a) einen Audio-Server, der auf ein Telekommunikationssignal anspricht, um ein Telekommunikations-Paket von der ersten Medien-Überleiteinrichtung (16, 18) zu empfangen, wobei das Telekommunikations-Paket ein vorgegebenes Kopffeld und eine Nutzinformation umfasst; wobei der Replikator (22) **dadurch gekennzeichnet ist, dass** er weiterhin Folgendes einschließt:
(b) einen Abschluss-Punkt zum Entfernen des vorgegebenen Kopffeldes von dem Paket, zum Replizieren der Nutzinformation und zum Hinzufügen eines neuen Kopffeldes zu der replizierten Nutzinformation (16, 18); und
(c) einen Relais-Punkt zum Lenken der replizierten Nutzinformation an die Adresse, die dem neuen Ziel-Kopffeld zugeordnet ist, und **dadurch gekennzeichnet, dass**:
(d) der Abschluss-Punkt so angeordnet ist, dass er ein abgeändertes vorgegebenes Kopffeld oder ein Ersatz-Kopffeld zu dem Telekommunikations-Paket oder der replizierten Nutzinformation hinzufügt, und dass der Relais-Punkt so angeordnet ist, dass er dieses Paket oder die Nutzinformation an die zweite Medien-Überleiteinrichtung lenkt, wobei das geänderte vorgegebene Kopffeld oder das Ersatz-Kopffeld eine derartige Adresseninformation hat, dass es der zweiten Medien-Überleiteinrichtung (16, 18) erscheint, dass die Mitteilung von der ersten Medien-Überleiteinrichtung kommt.

11. System nach Anspruch 9, bei dem die erste Medien-Überleiteinrichtung (16, 18) so ausgebildet ist, dass sie das Telekommunikationssignal an den Audio-Server lenkt.

12. System nach Anspruch 9, das weiterhin einen zweiten Abschluss-Punkt zum Hinzufügen eines zweiten vorgegebenen Kopffeldes zu der Nutzinformation umfasst.

13. System nach Anspruch 11, bei dem ein neues Ziel-Kopffeld zu der replizierten Nutzinformation hinzugefügt wird, wobei das zweite neue Ziel-Kopffeld einer Vollstreckungsbehörde (14) zugeordnet ist.

14. System nach Anspruch 11 oder 13, das weiterhin einen zweiten Relais-Punkt zum Lenken der Nutzinformation an die Adresse umfasst, die dem zweiten vorgegebenen Kopffeld zugeordnet ist.

15. System nach Anspruch 9, das weiterhin eine Medien-Überleiteinrichtungs-Steuerung (26, 30) umfasst, die auf die erste oder zweite Medien-Überleiteinrichtung (16, 18) anspricht, um festzustellen, dass ein Telekommunikations-Paket abzufangen ist.

16. System nach Anspruch 13, bei dem die Medien-Überleiteinrichtungs-Steuerung (26, 30) einen Anruf-Diskriminator (32) einschließt, der auf das Telekommunikationssignal anspricht, um festzustellen, dass das Telekommunikationssignal einem Abfangen unterworfen ist.

## Revendications

1. Un procédé d'interception d'un signal de télécommunication transmis entre une première passerelle de médias (16, 18) et une seconde passerelle de médias (16, 18) dans un réseau, le procédé comprenant :
(a) la réception d'un paquet de télécommunication provenant de la première passerelle de médias (16, 18), comprenant un en-tête prédéterminé et une charge utile ;
(b) la suppression de l'en-tête prédéterminé du paquet ;
(c) la duplication de la charge utile ;
(d) l'ajout d'un nouvel en-tête à la charge utile dupliquée ; et
(e) la direction de la charge utile dupliquée vers l'adresse associée au nouvel en-tête de destination ; et **caractérisé par**
(f) l'ajout d'un en-tête prédéterminé modifié ou d'un en-tête de substitution audit paquet de télécommunication ou à la charge utile dupliquée, et la direction de ce paquet ou de cette charge utile vers la seconde passerelle de médias, l'en-tête prédéterminé modifié ou l'en-tête de substitution comprenant une information d'adresse modifiée de telle sorte qu'il apparaît à la seconde passerelle de médias (16, 18) que le message provient de la première passerelle de médias (16, 18).

2. Le procédé de la revendication 1, comprenant en outre l'étape consistant à déterminer qu'un paquet de télécommunication doit être surveillé.

3. Le procédé de la revendication 1, comprenant en outre l'étape consistant à déterminer qu'un paquet de télécommunication doit être intercepté.

4. Le procédé de la revendication 1, comprenant en outre l'étape consistant à rediriger le signal de télécommunication.

5. Le procédé de la revendication 4, comprenant en outre l'étape consistant à déterminer qu'un paquet de télécommunication doit être redirigé.

6. Le procédé de la revendication 1, comprenant en outre l'étape consistant à associer le second nouvel en-tête à un destinataire prévu ou à organisme chargé de l'application de la loi (14).

7. Le procédé de la revendication 1, comprenant en outre l'étape consistant à remplacer l'entête prédéterminé par une seconde nouvelle destination.

8. Le procédé de la revendication 7, comprenant en outre l'étape consistant à associer le second nouvel en-tête de destination à l'autre parmi le destinataire prévu ou l'organisme chargé de l'application de la loi (14).

9. Le procédé de la revendication 7, dans lequel l'étape de remplacement a lieu après l'étape de duplication.

10. Un système pour intercepter un signal de télécommunication transmis entre une première passerelle de médias (16, 18) et une seconde passerelle de médias (16, 18) dans un réseau, le système comprenant un duplicateur (22) incluant :
(a) un serveur audio, réagissant à un signal de télécommunication, pour recevoir un paquet de télécommunication provenant de la première passerelle de médias (16, 18), le paquet de télécommunication comprenant un en-tête prédéterminé et une charge utile ; le duplicateur étant **caractérisé en ce qu'**il comprend en outre :
(b) un point de terminaison pour supprimer l'en-tête prédéterminé du paquet, pour dupliquer la charge utile et pour ajouter un nouvel en-tête à la charge utile dupliquée (16, 18) ; et
(c) un point de relais pour diriger la charge utile dupliquée vers l'adresse associée au nouvel en-tête de destination, et **caractérisé en ce que**
(d) le point de terminaison est agencé pour ajouter un en-tête prédéterminé modifié ou un en-tête de substitution audit paquet de télécommunication ou ladite charge utile dupliquée, et le point de relais est disposé pour diriger ce paquet ou cette charge utile à la seconde passerelle de médias, l'en-tête prédéterminé modifié ou l'en-tête de substitution ayant une information d'adresse de telle sorte qu'il apparaît à la seconde passerelle de médias (16, 18) que le message provient de la première passerelle de médias (16, 18).

11. Le système de la revendication 10, dans lequel la première passerelle de médias (16, 18) est adaptée pour diriger le signal de télécommunication vers le serveur audio.

12. Le système de la revendication 10, comprenant en outre un second point de terminaison pour ajouter un second en-tête prédéterminé à la charge utile.

13. Le système de la revendication 11, dans lequel un second nouvel en-tête de destination est ajouté à la charge utile dupliquée, le second nouvel en-tête de destination étant associé à un organisme chargé de l'application de la loi (14).

14. Le système des revendications 11 ou 13, comprenant en outre un second point de relais pour diriger la charge utile vers l'adresse associée au second en-tête prédéterminé.

15. Le système de la revendication 9, comprenant en outre une unité de commande de passerelle de médias (26, 30), réagissant à une première ou une seconde passerelle de médias (16, 18), pour déterminer qu'un paquet de télécommunication doit être intercepté.

16. Le système de la revendication 13, dans lequel l'unité de commande de passerelle de médias (26, 30) comprend un discriminateur d'appels (32), réagissant au signal de télécommunication, pour déterminer que le signal de télécommunication fait l'objet d'une interception.
